# EUROPÄISCHE PATENTSCHRIFT

(11) **EP 3 025 609 B1**
(45) Veröffentlichungstag und Bekanntmachung des Hinweises auf die Patenterteilung: **02.01.2019**
(21) Anmeldenummer: 14195104.6
(22) Anmeldetag: 27.11.2014
(51) Int. Cl.: A45C 5/14, B60B 33/00

(54) **Rollkoffer**
Trolley bag
Valise à roulettes

(43) Veröffentlichungstag der Anmeldung: 01.06.2016
(73) Patentinhaber: Georg A. Steinmann Lederwarenfabrik GmbH + Co. KG, 90455 Nürnberg (DE)
(72) Erfinder: Engbarth, Thomas, 55606 Bruschied (DE); Burkhart, Matthias, 67259 Heuchelheim (DE)
(74) Vertreter: Lindner Blaumeier Patent- und Rechtsanwälte

(56) Entgegenhaltungen:
- DE-A1- 1 532 841
- DE-A1- 2 103 106
- DE-A1- 2 331 837
- DE-U1-202007 012 320
- US-A- 5 407 218
- US-A1- 2012 285 780

## Beschreibung

Die vorliegende Erfindung betrifft einen Rollkoffer gemäß dem Oberbegriff des Anspruchs 1.

Zum leichteren Transport sind moderne Koffer häufig an ihrer Unterseite mit Rollen versehen, die ein Ziehen oder Schieben über den Boden erleichtern. Solche Rollkoffer werden häufig im allgemeinen Sprachgebrauch als Trolleys bezeichnet. Im Rahmen der vorliegenden Erfindung soll die Bezeichnung "Rollkoffer" nicht in beschränkender Weise für Reisekoffer verwendet werden, sondern soll auch ähnliche Transportbehälter umfassen, wie z.B. spezielle "Flight Cases" zum Transport von Ausrüstungsteilen. Des weiteren ist die vorliegende Erfindung auch auf Einkaufstrolleys oder ähnliche Arten mobiler Transportbehälter anwendbar.

US 5,407,218 A offenbart einen Behälter, an welchem austauschbare Rollen angebracht sind. Diese sind in abnehmbaren Kupplungsteilen gehalten, die seitlich außen am Behälter angebracht sind.

Behälter mit abnehmbaren Rollen sind ferner in DE 20 2007 012 320 U1, DE 21 03 106 A1, DE 15 32 841 A1 und US 2012/285780 A1 dargestellt.

Insbesondere sind Rollkoffer bekannt, die an ihren Unterseiten mit frei um eine senkrechte Achse schwenkbaren Rollenlagern versehen sind. Solche Rollkoffer werden gelegentlich auch als "Spinner" bezeichnet und sind sehr flexibel handhabbar. Die hier und im folgenden verwendeten Bezeichnungen der Raumrichtungen beziehen sich auf eine Gebrauchsanordnung, in der der jeweilige Koffer mit seinen Rollen auf einem Untergrund steht, so dass der im wesentlichen ebene Boden des Behälters horizontal steht. Die Erfindung ist allerdings nicht auf eine bestimmte Orientierung des Koffers beschränkt.

Seit kurzem sind auch Rollkoffer bekannt, deren Rollen abnehmbar sind. Zu diesem Zweck sind die Rollen durch eine lösbare Steckkupplung mit dem Behälter verbunden, die einen fest am Behälter angebrachten Kupplungsteil und einen damit kuppelbaren bzw. abnehmbaren Kupplungsteil umfasst. Letzterer lagert die Rollen, die durch Auskuppeln des abnehmbaren Kupplungsteils einfach vom Behälter zu entfernen ist. Die Abnehmbarkeit der Rollen bietet den Vorteil, dass die äußeren Abmessungen des Koffers reduziert werden können und dieser besser verstaubar ist. Außerdem wird verhindert, dass die Rollen bei grober Handhabung, wie etwa bei der Gepäckabfertigung auf Flughäfen, beschädigt werden. Schließlich gewährt die Austauschbarkeit der Rollen auch ein leichtes Ersetzen beschädigter Rollen und eine Vereinfachung einer Reparatur.

Diese Abnehmbarkeit der Rollen ist jedoch bisher nur im Zusammenhang mit den frei unter dem Behälter schwenkbaren Rollen der sogenannten "Spinner" bekannt, wie oben beschrieben. Diese Rollen sind aufgrund ihrer Positionierung unterhalb des Bodens notwendigerweise relativ klein. Es ist allerdings erwünscht, auch größere Rollen verwenden zu können, die Vorteile im Rollkomfort und in der Handhabung bieten, insbesondere beim Fahren des Rollkoffers über Treppenstufen, ohne dass die Vorderkante des Behälters an der Stufe anschlägt. Es existiert jedoch bisher keine praktische Konstruktion, durch die solche größeren Rollen abnehmbar sind.

Es ist daher die Aufgabe der vorliegenden Erfindung, einen Rollkoffer zu schaffen, der größere Rollen aufweist, die jedoch abnehmbar sind und somit die Vorteile der bisher bekannten abnehmbaren Rollen mit einem höheren Komfort beim Transport verbindet.

Diese Aufgabe wird erfindungsgemäß durch einen Rollkoffer mit den Merkmalen des Anspruchs 1 gelöst.

Die Rollen dse erfindungsgemäßen Rollkoffers sind seitlich gegenüberliegend am Behälter angebracht und jeweils um eine Rollenachse drehbar, die horizontal steht und ortsfest ist, d. h. bezüglich des Behälters nicht schwenkbar ist. Diese ortsfeste horizontale Rollenachse geht seitlich von dem abnehmbaren Kupplungsteil aus.

Das abnehmbare Kupplungsteil selbst kann, wie schon bei der bekannten Steckkupplung, beispielsweise senkrecht von unten in den feststehenden Kupplungsteil im Behälterboden eingeführt und darin eingerastet werden. Die Rollenachse erstreckt sich dann seitlich über den Behälter hinaus, so dass ihr Ende auch eine Rolle mit größerem Durchmesser aufnehmen kann.

Die erfindungsgemäße Anordnung bietet den Vorteil, dass der abnehmbare Kupplungsteil mit der größeren seitlichen Rolle ggfs. mit dem feststehenden Kupplungsteil einer konventionellen Rolle zur Anbringung unterhalb des Bodens kompatibel sein kann. Gegebenenfalls wird also ein Austausch der verschiedenen Rollensysteme gegeneinander möglich.

Während die Rolle des erfindungsgemäßen Systems eine Größe aufweisen kann, die eine komfortable Handhabung des Rollkoffers z.B. auch an Treppen ermöglicht, bleiben die Vorteile der Abnehmbarkeit der Rolle erhalten, also ein Austausch im Reparaturfall und insbesondere eine Verkleinerung der größeren Abmessungen des Rollkoffers, so dass trotz der größeren Rollen der Rollkoffer gut verstaubar bleibt.

Weitere Vorzüge der vorliegenden Erfindung ergeben sich durch deren bevorzugte Ausführungsformen.

In einer bevorzugten Ausführungsform der vorliegenden Erfindung ist der abnehmbare Kupplungsteil senkrecht von der Unterseite des Bodens her in den feststehenden Kupplungsteil einsteckbar. In diesem Fall steht also die Rollenachse senkrecht zur Einsteckrichtung des abnehmbaren Kupplungsteils.

In einer bevorzugten Ausführungsform ist die Rollenachse gerade und liegt unterhalb der Ebene des Bodens.

In einer weiteren bevorzugten Ausführungsform ist die Rollenachse gekröpft, und das die Rolle haltende Ende der Rollenachse liegt oberhalb der Ebene des Bodens, während das mit dem abnehmbaren Kupplungsteil verbundene Ende versetzt unterhalb der Ebene des Bodens liegt. Durch diese Anordnung ist der Boden des Behälters auch bei größeren Rollen nicht zu weit über dem Untergrund positioniert.

Erfindungsgemäß weist der abnehmbare Kupplungsteil einen in Einsteckrichtung vorspringenden Zapfen auf, der in eine entsprechende Aufnahme im feststehenden Kupplungsteil einführbar und lösbar darin einrastbar ist, und der abnehmbare Kupplungsteil ist im eingerasteten Zustand verdrehsicher mit dem feststehenden Kupplungsteil gekuppelt.

Weiter vorzugsweise ist der Boden des Behälters im wesentlichen rechteckig, und zwei Rollen sind gegenüberliegend mit zwei aufeinander ausgerichteten Rollenachsen an zwei vorderen Ecken des Bodens angebracht, während an den verbleibenden hinteren Ecken des Bodens zwei Füße angebracht sind.

Gemäß einer weiteren bevorzugten Ausführungsform sind die Füße durch lösbare Steckkupplungen mit dem Behälter verbunden, die identisch zu den Steckkupplungen der Rollen ausgebildet sind oder mit diesen zumindest kompatibel sind. Mit dem Begriff "kompatibel" soll bezeichnet werden, dass die Füße und die Rollen jeweils an abnehmbaren Kupplungsteilen angebracht sind, die sich in gleich ausgestaltete feststehende Kupplungsteile einstecken und damit kuppeln lassen. Füße und Rollen sind somit frei gegeneinander austauschbar.

Gemäß einer weiteren bevorzugten Ausführungsform der Erfindung sind die Rollen von der jeweiligen Rollenachse abnehmbar. Beispielsweise kann die jeweilige Rolle auf ihre Rollenachse aufgesteckt sein und von dieser wieder abgezogen werden.

Im folgenden wird ein bevorzugtes Ausführungsbeispiel der vorliegenden Erfindung anhand der Zeichnung näher erläutert.

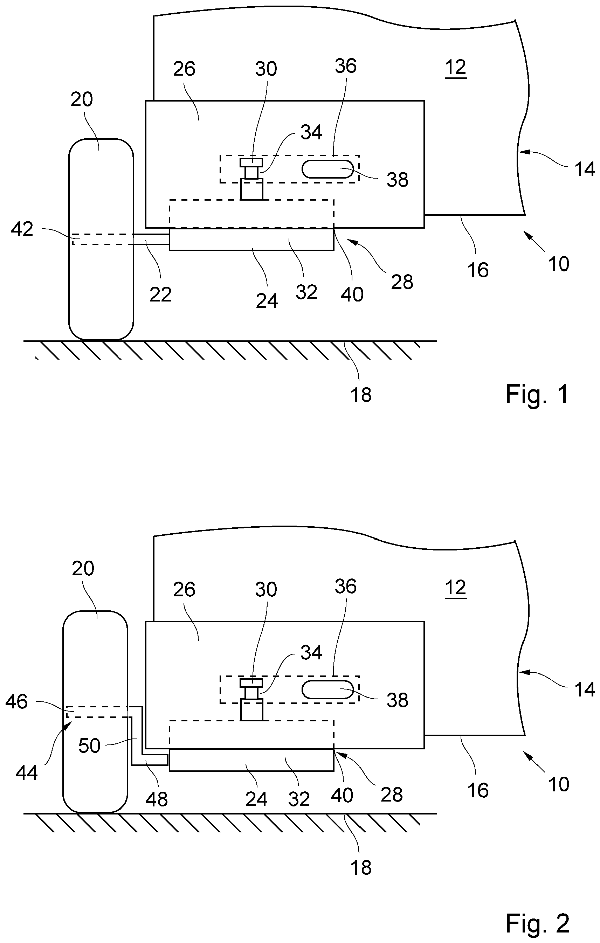

- Fig. 1 und 2: sind schematische Teilansichten verschiedener Ausführungsformen des erfindungsgemäßen Rollkoffers.

Fig. 1 und 2 zeigen jeweils eine Ecke einer Ausführungsform des erfindungsgemäßen Rollkoffers 10, mit Blick auf eine Rückwand 12 des Behälters 14, der im wesentlichen quaderförmig ausgebildet ist und zur Aufnahme des Kofferinhalts dient. Der Behälter 14 wird an seiner Unterseite durch einen Boden 16 begrenzt, der im wesentlichen eben ist und in einer stehenden Gebrauchsposition des Rollkoffers 10 horizontal und parallel zum Untergrund 18 steht. Auf diese Gebrauchsposition mit ebenem horizontalen Boden 16 beziehen sich im folgenden sämtliche Richtungsangaben und räumliche Orientierungen, wie etwa die Begriffe "senkrecht", "horizontal" und dergleichen, in nicht beschränkender Weise für die vorliegende Erfindung. Der Rollkoffer 10 kann aus der dargestellten Position in eine gekippte Transportposition gebracht werden, in der der Boden 16 gegenüber dem Untergrund 18 geneigt ist.

An jeder der beiden Ecken des Bodens 16, die die Rückwand 12 des Behälters 14 begrenzt und von denen jeweils nur eine in den Fig. 1 und 2 dargestellt ist, ist eine Rolle 20 seitlich am Behälter 14 angebracht, so dass die Rollen 20 einander seitlich gegenüber liegen. Die Rolle 20 ist um eine horizontale Rollenachse 22 drehbar. Die Rollenachse 22 geht von einem abnehmbaren Kupplungsteil 24 aus, das von der Unterseite des Rollkoffers 10 her in einen fest am Behälter 14 angebrachten Kupplungsteil 26 eingekuppelt ist und in der eingekuppelten Position fest gehalten wird. Die Rollenachsen 22 der dargestellten Rolle 20 und der nicht gezeigten Rolle 20 sind aufeinander ausgerichtet. Der abnehmbare Kupplungsteil 24 bildet gemeinsam mit dem feststehenden Kupplungsteil 26 eine lösbare Steckkupplung 28. Durch Lösen der Kupplung kann der abnehmbare Kupplungsteil 24, der die Rolle 20 hält, abgenommen und somit vom Rollkoffer 10 entfernt werden.

Im einzelnen umfasst der abnehmbare Kupplungsteil 24 einen in Einsteckrichtung, d. h. senkrecht nach oben vorspringenden Zapfen 30 auf, der von einem Körper 32 des abnehmbaren Kupplungsteils 24 nach oben vorspringt und in eine entsprechende Aufnahme im feststehenden Kupplungsteil 26 einführbar und lösbar darin einrastbar ist. Zu diesem Zweck weist der Zapfen 30 eine umlaufende Nut 34 auf, in die ein horizontal seitlich gegen den Zapfen 30 beweglicher Schlitten 36 innerhalb des feststehenden Kupplungsteils 26 federnd vorgespannt ist. Mittels eines von der Rückwand 12 des Behälters 14 frei zugänglichen Schiebers 38 kann der Schlitten 36 entgegen seiner Vorspannrichtung zurückgezogen werden, so dass der Zapfen 30 in die Aufnahme eingeführt werden kann. Wird der Schieber 38 wieder gelöst, gleitet der Schlitten 36 selbsttätig gegen den Zapfen 30 und greift in die ringförmige Nut 34 ein, so dass ein Herausziehen des Zapfens 30 in senkrechter Richtung nach unten verhindert wird. In dieser Stellung wird der Korpus 32 des abnehmbaren Kupplungsteils 24 sicher in einer flachen Aussparung 40 in der Unterseite des feststehenden Kupplungsteils 26 gehalten, und zwar derart, dass der abnehmbare Kupplungsteil 24 sich nicht um die Achse des Zapfens 30 drehen kann.

Das Lösen des abnehmbaren Kupplungsteils 24 vom feststehenden Kupplungsteil 26 erfolgt in umgekehrter Reihenfolge durch Zurückziehen des Schlittens 36 mittels des Schiebers 38 und Herausnehmen des abnehmbaren Kupplungsteils 24 aus der flachen Ausnehmung 40.

Die Rollenachse 22 ist fest im Korpus 32 des abnehmbaren Kupplungsteils 24 gehalten, und die Rolle 20 kann sich frei auf dem nach außen weisenden Ende 42 der Rollenachse 22 drehen. Die Rollenachse 22 steht ortsfest, d. h., sie kann nicht seitlich verschwenkt werden. Dies wird durch den drehfesten Sitz des abnehmbaren Kupplungsteils 24 in der flachen Ausnehmung 40 gewährleistet. Die Rollenachse 22 steht horizontal und parallel zu der Kante, an welcher der Boden 16 und die Rückwand 12 des Behälters 14 aufeinanderstoßen. Die Rollenachse 22 liegt ferner parallel unterhalb des Bodens 16 versetzt.

Da die Rolle 20 seitlich am Behälter 14 angebracht ist, kann sie einen vergleichsweise großen Durchmesser aufweisen, gegenüber einer herkömmlichen Rolle, die in dem Zwischenraum zwischen der Unterseite des Korpus 32 des abnehmbaren Kupplungsteils 24 und den Untergrund 18 Platz finden muss. Trotz der Größe der Rolle 20 lässt sich der erfindungsgemäße Rollkoffer 10 einfach verstauen, indem die Rollen 20 abgenommen werden und die äußeren Abmessungen des Rollkoffers somit verringert werden.

Zusätzlich kann die Möglichkeit vorgesehen sein, die jeweilige Rolle 20 von ihrer Rollenachse 22 abzunehmen. Zu diesem Zweck kann die Rolle 20 auf ihre Rollenachse 22 aufgesteckt sein, so dass sie in axialer Richtung von dieser abgezogen werden kann.

Die verbleibenden freien Ecken des Bodens 16 an der in den Figuren nicht sichtbaren Vorderwand des Behälters 14 können mit Füßen versehen sein, die ebenfalls durch lösbare Steckkupplungen mit dem Behälter 14 verbunden sind. Diese Steckkupplungen können identisch zu den in den Figuren dargestellten Steckkupplungen 28 der Rollen 20 ausgebildet sein, d. h., ihre lösbaren Kupplungsteile können in die feststehenden Kupplungsteile 26, wie vorstehend beschrieben, eingesetzt und darin verrastet werden. Dies bietet den Vorteil, dass die Füße gegebenenfalls durch Rollen 20 ersetzt werden können, so dass der Rollkoffer 10 insgesamt mit vier Rollen 20 an seiner Unterseite ausgestattet ist. Es ist auch denkbar, die Steckkupplungen kompatibel zu bereits bekannten Steckkupplungen auszubilden, so dass bekannte Rollen durch die erfindungsgemäßen Rollen 20, die seitlich am Behälter 14 anzubringen sind, ausgetauscht werden können.

Während in Fig. 1 eine Rollenachse 22 dargestellt ist, die gerade ausgebildet ist, so dass ihre Enden beide auf einer gemeinsamen Rollenachse liegen, zeigt Fig. 2 eine gekröpfte Rollenachse 44. Der die Rolle 20 haltende Endabschnitt 46 dieser Rollenachse 44 liegt oberhalb der Ebene des Bodens 16, während der mit dem abnehmbaren Kupplungsteil 24 verbundene Endabschnitt 48 versetzt unterhalb der Ebene des Bodens 16 liegt. Die Abschnitte der jeweiligen Endabschnitte 46,48 sind zueinander parallel und stehen horizontal, sind jedoch zueinander höhenversetzt, wie vorstehend beschrieben. Ein senkrechter Verbindungsabschnitt 50 der gekröpften Rollenachse 44, der die beiden Endabschnitte 46,48 verbindet, steht senkrecht und liegt seitlich am Behälter 14 an bzw. in einer darin vorgesehenen flachen Aussparung ein. Der Kupplungsmechanismus der Steckkupplung 28 entspricht demjenigen aus Fig. 1 und ist daher in Fig. 2 nicht näher dargestellt.

## Patentansprüche

1. Rollkoffer (10), umfassend einen Behälter (14) mit einem im wesentlichen ebenen Boden (16) und mindestens zwei an zwei Ecken des Bodens (16) angebrachte Rollen (20), die durch eine lösbare Steckkupplung (28) mit dem Behälter (14) verbunden sind und von diesem abnehmbar sind, wobei die Steckkupplung (28) einen am Behälter (14) fest angebrachten Kupplungsteil (26) und einen abnehmbaren Kupplungsteil (24) umfasst, und die Rollen (20) seitlich gegenüberliegend außen am Behälter (14) angebracht sind und jeweils um eine horizontale Rollenachse (22,44) drehbar sind, die von dem abnehmbaren Kupplungsteil (24) ausgeht und deren Ausrichtung im eingekuppelten Zustand ortsfest gehalten wird, **dadurch gekennzeichnet, dass** der abnehmbare Kupplungsteil (24) von der Unterseite des Rollkoffers (10) her in den fest angebrachten Kupplungsteil (26) einkuppelbar ist und einen Körper (32) aufweist, der in eine flache Aussparung (40) in der Unterseite des fest angebrachten Kupplungsteils (26) einsetzbar ist, sowie einen senkrecht nach oben vorspringenden Zapfen (30), der von dem Körper (32) nach oben vorspringt und in eine entsprechende Aufnahme im fest angebrachten Kupplungsteil (26) einführbar und lösbar darin einrastbar ist, derart, dass der abnehmbare Kupplungsteil (24) im eingerasteten Zustand verdrehsicher mit dem fest angebrachten Kupplungsteil (26) gekuppelt ist.

2. Rollkoffer gemäß Anspruch 1, **dadurch gekennzeichnet, dass** der abnehmbare Kupplungsteil (24) senkrecht von der Unterseite des Bodens (16) her in den fest angebrachten Kupplungsteil (26) einsteckbar ist und die Rollenachse (22) senkrecht zur Einsteckrichtung steht.

3. Rollkoffer gemäß Anspruch 1 oder 2, **dadurch gekennzeichnet, dass** die Rollenachse (22) gerade ist und unterhalb der Ebene des Bodens (16) liegt.

4. Rollkoffer gemäß Anspruch 1 oder 2, **dadurch gekennzeichnet, dass** die Rollenachse (44) gekröpft ist und das die Rolle (20) haltende Ende oberhalb der Ebene des Bodens (16) liegt, während das mit dem abnehmbaren Kupplungsteil (24) verbundene Ende unterhalb der Ebene des Bodens (16) liegt.

5. Rollkoffer gemäß einem der vorhergehenden Ansprüche, **dadurch gekennzeichnet, dass** der Boden (16) des Behälters (14) im wesentlichen rechteckig ist und zwei Rollen (20) gegenüber liegend mit aufeinander ausgerichteten Rollenachsen (22) an zwei vorderen Ecken des Bodens (16) angebracht sind, während an den verbleibenden hinteren Ecken des Bodens (16) zwei Füße angebracht sind.

6. Rollkoffer gemäß Anspruch 5, **dadurch gekennzeichnet, dass** die Füße durch lösbare Steckkupplungen mit dem Behälter verbunden sind, von die identisch zu den Steckkupplungen (28) der Rollen (20) ausgebildet sind oder mit diesen zumindest kompatibel sind.

7. Rollkoffer gemäß einem der vorhergehenden Ansprüche, **dadurch gekennzeichnet, dass** die Rollen (20) von der jeweiligen Rollenachse (22,44) abnehmbar sind.

## Claims

1. Rolling suitcase (10) comprising a container (14) having an essentially planar base (16) and at least two rollers (20), which are fitted at two corners of the base (16) and are connected to the container (14), and can be removed therefrom, by a releasable plug-fit coupling (28), wherein the plug-fit coupling (28) comprises a coupling part (26) which is fixed on the container (14) and also a removable coupling part (24), and the rollers (20) are fitted laterally opposite one another on the outside of the container (14) and can each be rotated about a horizontal roller axle (22, 44), which extends from the removable coupling part (24) and which is kept in a fixed position in the coupled-in state, **characterized in that** the removable coupling part (24) can be coupled into the fixed coupling part (26) from the underside of the rolling suitcase (10) and has a body (32), which can be inserted into a shallow recess (40) in the underside of the fixed coupling part (26), and also a vertically upwardly projecting stub (30), which projects upwards from the body (32) and can be introduced into a corresponding mount in the fixed coupling part (26) and can be latched in a releasable manner therein such that, in the latched-in state, the removable coupling part (24) is coupled in a rotationally secure manner to the fixed coupling part (26).

2. Rolling suitcase according to Claim 1, **characterized in that** the removable coupling part (24) can be plugged into the fixed coupling part (26) vertically from the underside of the base (16) and the roller axle (22) is located perpendicularly to the plug-in direction.

3. Rolling suitcase according to Claim 1 or 2, **characterized in that** the roller axle (22) is rectilinear and is located beneath the plane of the base (16).

4. Rolling suitcase according to Claim 1 or 2, **characterized in that** the roller axle (44) is angled and the end which retains the roller (20) is located above the plane of the base (16), whereas the end which is connected to the removable coupling part (24) is located beneath the plane of the base (16).

5. Rolling suitcase according to one of the preceding claims, **characterized in that** the base (16) of the container (14) is essentially rectangular and two rollers (20) are fitted opposite one another, with aligned roller axles (22), at two front corners of the base (16), whereas two feet are fitted at the remaining, rear corners of the base (16).

6. Rolling suitcase according to Claim 5, **characterized in that** the feet are connected to the container by releasable plug-fit couplings, from which are identical to the plug-fit couplings (28) of the rollers (20) or at least compatible therewith.

7. Rolling suitcase according to one of the preceding claims, **characterized in that** the rollers (20) can be removed from the respective roller axle (22, 44).

## Revendications

1. Valise à roulettes (10), comprenant un contenant (14) avec un fond sensiblement plan (16) et au moins deux roulettes (20) montées au niveau de deux coins du fond (16), qui sont connectées au contenant (14) par un accouplement par enfichage libérable (28) et qui peuvent être retirées de celui-ci, l'accouplement par enfichage (28) comprenant une partie d'accouplement (26) montée fixement sur le contenant (14) et une partie d'accouplement amovible (24), et les roulettes (20) étant montées en regard latéralement à l'extérieur sur le contenant (14) et pouvant pivoter à chaque fois autour d'un axe de roulette horizontal (22, 44) qui part de la partie d'accouplement amovible (24) et dont l'orientation est maintenue fixe dans l'état accouplé, **caractérisée en ce que** la partie d'accouplement amovible (24) peut être accouplée depuis le côté inférieur de la valise à roulettes (10) dans la partie d'accouplement montée fixement (26) et présente un corps (32) qui peut être inséré dans un évidement plat (40) dans le côté inférieur de la partie d'accouplement montée fixement (26), ainsi qu'un tourillon (30) saillant verticalement vers le haut, qui fait saillie vers le haut depuis le corps (32) et qui peut être introduit dans un évidement correspondant dans la partie d'accouplement montée fixement (26) et être encliqueté de manière amovible dans celle-ci, de telle sorte que la partie d'accouplement amovible (24), dans l'état encliqueté, soit accouplée de manière imperdable à la partie d'accouplement montée fixement (26).

2. Valise à roulettes selon la revendication 1, **caractérisée en ce que** la partie d'accouplement amovible (24) peut être enfichée verticalement depuis le côté inférieur du fond (16) dans la partie d'accouplement montée fixement (26) et l'axe de roulette (22) est perpendiculaire à la direction d'enfichage.

3. Valise à roulettes selon la revendication 1 ou 2, **caractérisée en ce que** l'axe de roulette (22) est droit et est situé en dessous du plan du fond (16) .

4. Valise à roulettes selon la revendication 1 ou 2, **caractérisée en ce que** l'axe de roulette (44) est coudé et **en ce que** l'extrémité retenant la roulette (20) est située au-dessus du plan du fond (16), tandis que l'extrémité connectée à la partie d'accouplement amovible (24) est située en dessous du plan du fond (16).

5. Valise à roulettes selon l'une quelconque des revendications précédentes, **caractérisée en ce que** le fond (16) du récipient (14) est essentiellement rectangulaire et deux roulettes (20) sont montées en regard l'une de l'autre avec des axes de roulette (22) orientés l'un vers l'autre au niveau de deux coins avant du fond (16), tandis que deux pieds sont montés au niveau des coins arrière restants du fond (16).

6. Valise à roulettes selon la revendication 5, **caractérisée en ce que** les pieds sont connectés au contenant par le biais d'accouplements d'enfichage amovibles de qui sont réalisés de manière identique aux accouplements d'enfichage (28) des roulettes (20) ou qui sont au moins compatibles avec ceux-ci.

7. Valise à roulettes selon l'une quelconque des revendications précédentes, **caractérisée en ce que** les roulettes (20) peuvent être enlevées de l'axe de roulette respectif (22, 44).
